# EUROPEAN PATENT SPECIFICATION

(11) **EP 2 407 026 B1**
(45) Date of publication and mention of the grant of the patent: **17.12.2014**
(21) Application number: 10706277.0
(22) Date of filing: 26.01.2010
(51) Int. Cl.: A01K 23/00

(54) **Horse manure collection system**
Sammelsystem für Pferdedung
Système de récupération des excréments d'équidés

(30) Priority: 26.01.2009 ES 200900132 U
(43) Date of publication of application: 18.01.2012
(73) Proprietor: Hernández Ramírez, José, 28806 Alcalá de Henares (ES)
(72) Inventor: Hernández Ramírez, José, 28806 Alcalá de Henares (ES)
(74) Representative: De la Fuente Fernandez, Dionisio
(86) International application number: PCT/ES2010/070040
(87) International publication number: WO 2010/084232

(56) References cited:
- WO-A1-2008/130218
- DE-C- 24 628
- FR-A- 819 023
- US-A- 5 195 455

## Description

The invention refers to a system for the collection of equine faeces.

Document ES 1 033 361 describes a deposit system in truss form around the animal's anus capable of changeover in its rear for the collection of faeces, so that when the animal eliminates faeces, the faeces are in its interior. The main disadvantage of this system is the lack of hygiene, since the animal's body will remain exposed to contact with the faeces.

In turn, document ES 1069640 indicates an article to collect animal deposits styled as a disposable diaper. The basic problem with this solution arises when placing the article on animals of great size, the discomfort caused to the animal and the odours caused by the lack of insulation.

DE 24 628 C describes devices applicable to the anal area of riding or draft animals for collecting stool. In one embodiment, the device comprises a single collecting container attached to the body of an animal by means of straps, while in other versions the collector may be attached to one side of a carriage with the faeces being conducted to the collecting container through a tube having its upper end applied to the animal's anal area.

FR 819 023 A discloses a device for collecting faeces from farm animals in order to maintain improved clean and sanitary conditions both inside the stables and on the public roads. The device comprises two parts joined together by means of a flexible duct, a first of said two parts consisting of straps, ropes, cords or similar that may be of rigid or non-rigid nature, with said first part being attached to the animal's body and with a second of said two parts consisting of a collecting container which either may be suspended from the ceiling of the stable two follow the movements of the animal or transportable. The joining flexible duct eXtended between both parts of the device is provided witch suitable means, such as a valve, to keep the passage closed to prevent the bad odors.

WO 2008/130218 A1 discloses an excrement collector device for animals such as animas used in the agricultural field, the device comprising a collector for collecting feces excreted by the animal, harness for attaching the container to the body of the animals, and a sensor for measuring a parameter related to the excreted feces.

### Object of the Invention

Starting from the above-mentioned state of technique, the present invention, as stated in the summary statement of this descriptive report, refers to an equine faeces collection system equipped for the reception, treatment and isolation of animal faeces hygienically, without causing the animal discomfort.

According to the invention, this objective is achieved by a system, as claimed in claim 1, collecting excrement by means of a tube with a faeces outlet connected to the intake to the collection deposit and an intake mouth adapted to face the animal's anal area, so that the excrement is led to such deposit, wherein the collection device has a first collection area including the outlet mouth which is connected to the collection deposit intake and a second collection area which includes the intake mouth which is linked to the first area to move from a rest position to a collection position in which the intake mouth is facing the animal's anal area, in which collection position this intake mouth is located over the outlet mouth so that the excrement runs through to the faeces deposit by gravity.

The first collection area includes within it a turbine driven by a motor to drag faeces to at least the deposit.

An additional advantage can be achieved by including a receiver in the motor for operation by remote control.

Another of the additional features is having a drive and detection device to run the motor and to detect when the animal lifts its tail upon beginning elimination, which is connected operationally on the back of the animal.

Thanks to another of the equine faeces collection system's additional features, the drive and detection device includes a support plate on which it is mounted fixed on a control transmitter with a drive switch and an articulated handle to face the switch operationally.
This comes with a free end to lie next to the animal's tail so that when the animal lifts its tail prior to elimination, the transmitter control switch trips so that the motor begins to turn and the faeces can be dragged by the turbine through to the deposit.

Preferably, the support plate is endowed with an articulated appendix to fit the support on the back of the horse.

Thanks to another of the additional features, between the first and second tubular areas of the collection device there is a tubular section which is coupled to the first and second collection areas to orient them adequately and to have the intake mouth of the second area facing the animal's anal area perfectly.

Thanks to another additional feature, there are additional sections of tube to increase the length of the tubular collection device.

An additional advantage can be achieved by means of a device to regulate the orientation of the tubular section provided between the first and second area.

Thanks to another additional feature, the equine faeces collection system is connected to the animal with the aid of a cavalry harness.

Another of the additional features is that the turbine blades are adapted to finely crush and break down the animal's faeces for their subsequent use as compost or biofuel.

Preferably, the deposit is connected to a bag in the outlet mouth for the reception of faeces or the result of their treatment.

Preferably, the upper part of the deposit comes with a port for extracting the faeces or the mass resulting from their treatment.

One additional feature of the equine faeces collection system is having it coupled to a carriage with an adjustable setting system.

Thanks to another additional feature, the equine faeces collection system can have several intake mouths connected to the collection device.

Thanks to another additional feature, the motor can even be fed by the energy generated by movement of the carriage wheel.

### Brief description of the figures

Other of the preferred features and advantages are more clearly seen from the following descriptions made with the aid of the attached drawings, referring but not limited to an example of execution in which:
Figure 1 shows schematically the equine faeces collection system in place on the animal.
Figure 2 shows in detail the drive and detection device.
Figure 3 shows in detail the excrement collection device.
Figure 4 shows the faeces deposit.
Figure 5 represents the articulated section.
Figure 6 represents the tubular expansion sections and the intake mouth.

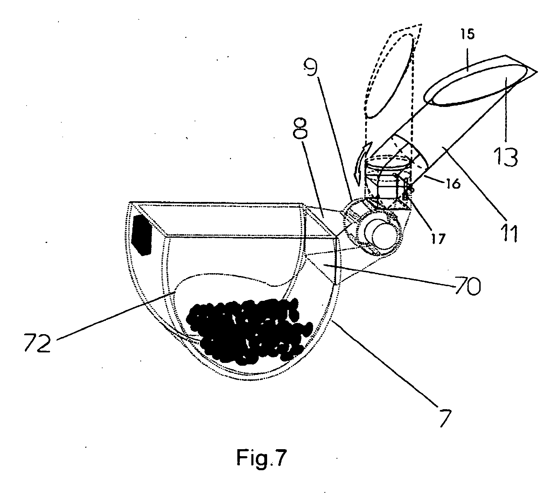

Figure 7 represents schematically the rest and collection positions of the collection device.
Figure 8 represents the mechanism for connecting the carriage.

### Detailed description of preferred layouts.

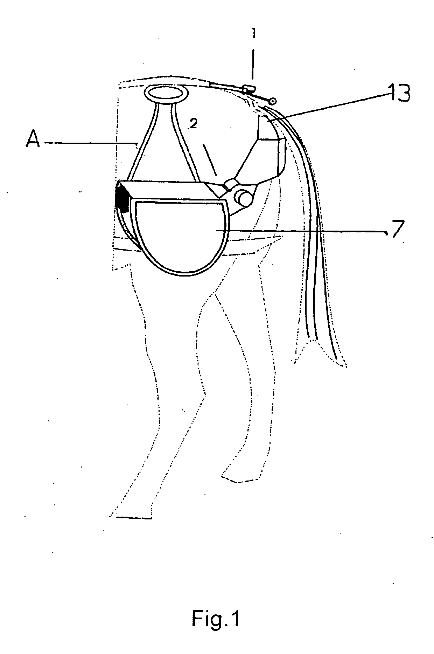

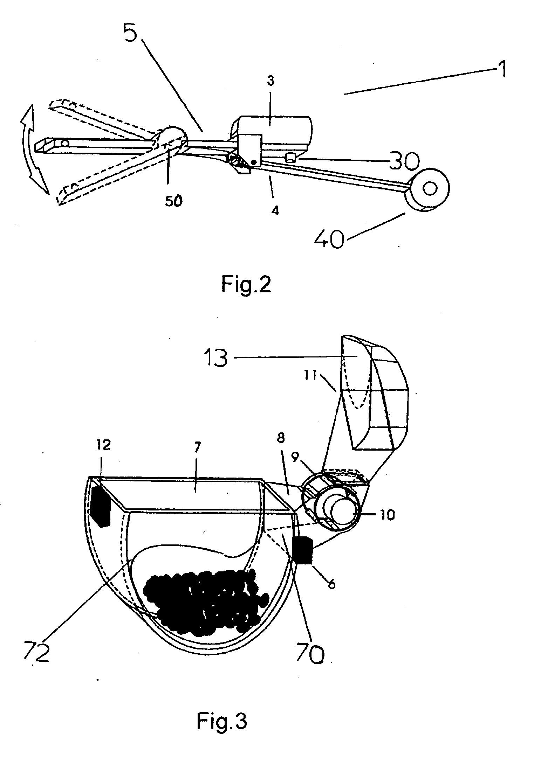

As can be seen in figures 1 and 3 the equine faeces collection system consists of a faeces collection device (2) of an essentially tubular shape with an intake mouth (13) facing the animal's anal area for receiving the faeces when the animal eliminates faeces, which is then led to the collection deposit (7).

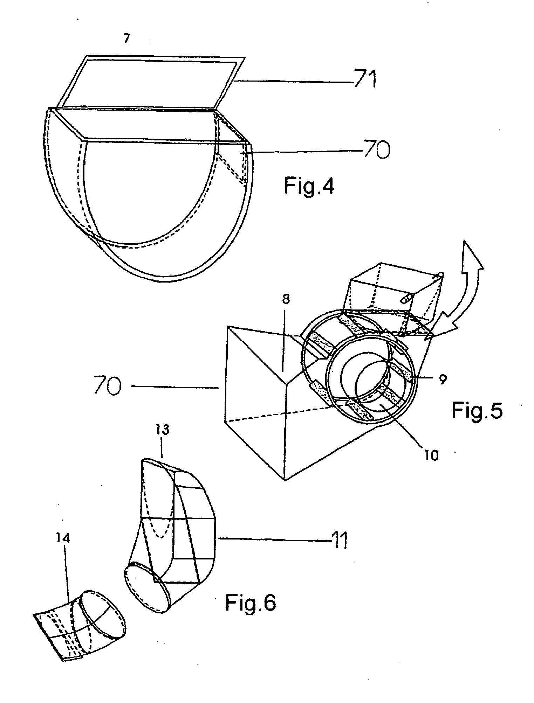

As can be seen in figures 3 and 5, the collection device (2) goes from a rest position to a collection position, that is to say, with the intake mouth (13) facing the animal's anal area. To do so, the collection device (2) has a first collection area (8) in the form of an inverted funnel which ends at the outlet mouth (70) to the deposit collection intake (7) which is coupled to the second collection area (11) orienting the intake mouth (13) to the animal's anal area.

It can be seen that, in the collection position, the intake mouth (13) of the second collection area (11) is located higher than the outlet mouth (70) of the first collection area (8), so that the faeces can run towards the deposit (7) by gravity.

However, in order to assist the movement of faeces from the intake mouth (13) to the deposit (7), the first collection area (8) contains a turbine controlled by a motor (10), so that when the motor (10) activates the turbine blades, the faeces are pushed towards the deposit (7).

The motor (10) can be provided with a receiver (6) in order to be activated by remote control, although connection by cable would also be possible.

In addition, according to the invention description, the system can incorporate a drive and detection device (1) to trip the motor (10); this includes a support plate (5) on which it is mounted fixed on a control transmitter (3) with a drive switch (30) and an articulated handle (4) to operationally face the switch (30). This comes with a free end (40) to lie next to the animal's tail. Thus when the animal lifts its tail prior to elimination, the switch (30) is activated and the control transmitter (3) sends a signal so that the motor (10) begins to turn and the faeces can be dragged by the turbine (9) through to the deposit (7).

In order to fit its connection on the animal and avoid annoying it, the support plate (5) has an articulated appendix (50) which tilts to fit it to the back of the animal, so that the articulated handle (4) moves the activation switch (30) when the animal moves its tail.

In order to provide more mobility for the collection device (2) between the first (8) and second (11) areas, the collection tubes (2) include a tubular section (16) which is coupled to the first and second collection areas to orient them suitably and to have the intake mouth (13) of the second area (11) facing the animal's anal area perfectly.

When it is necessary for the collection device (2) to have a greater length as a result of its installation on carriages, additional sections of tubing (14) are provided as shown in figure 6.

A device (17) is provided for when the placement of the collection device makes it necessary to change the orientation of the second area (11) in order to enable it to face the animal's anal area.

When the faeces collection system is deployed on the animal it is located on its side and will be bound to the animal by means of a cavalry harness (A).

In another of the invention's preferred placements, the turbine blades (9) are deployed to finely crush the faeces and place them in the deposit (7) ready for subsequent use as compost or biofuel.

In order to make the collection of faeces or the product resulting from crushing simpler, at least one port (71) is included in the upper part of the deposit (7).

It is also possible to connect a bag (72) to the outlet mouth (70) of the deposit (7).

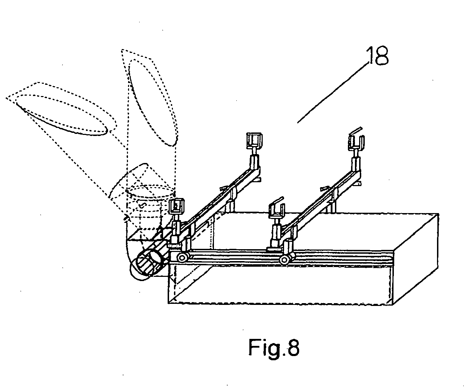

Finally, as shown in figure 8, it is possible to connect the equine faeces collection system to a carriage for the device (18). In this case the motor (10) could be fed by the energy produced by movement of the carriage wheels; there can be several collection devices (2) connected to the deposit (7).

As can easily be understood by persons well versed in the art, the above-described layouts are merely samples of preferred ways for deploying the invention, as literally any type of technical modification is possible without thereby abandoning its purpose. Thus the invention will only be limited by the scope of the subsequent claims.

## Claims

1. An equine faeces collection system comprising at least the following:
- A deposit (7) for faeces collection; and
- An excrement collection device (2) essentially in tube form with an outlet for faeces (70) connected to the intake of the collection deposit (7) and an intake mouth (13) adapted to face the animal's anal area so that the excrement can be led to such deposit (7), wherein
said collection device (2) has a first collection area (8) where said outlet mouth (70) is included and which is connected to the intake of the collection deposit (7), and a second collection area (11) where said intake mouth (13) is included **characterised in that** the second collection area (11) is coupled to the first area (8) to move from a rest position to a collection position in which the intake mouth (13) is facing the animal's anal area, in which collection position the intake mouth (13) is located higher than the outlet mouth (70) so that the faces can run towards the deposit by gravity,
and **in that** the first collection area (8) includes within it a turbine (9) moved by an electrical motor (10) to drag faeces through to the deposit (7).

2. The equine faeces collection system pursuant to claim 1 is **characterized by** having the electrical motor (10) including a receiver (6) to operate it by remote control.

3. The equine faeces collection system pursuant to claims 1 and 2 is **characterized by** having it further included a drive and detection device (1) to run the electrical motor (10) and to detect when the animal lifts its tail upon beginning elimination that is connected operationally on the back of the animal.

4. The equine faeces collection system pursuant to claim 3 is **characterized by** having the drive and detection device (1) formed by a support plate (5) which leans on the back of the animal on which it is mounted fixed on a control transmitter (3) with a drive switch (30) and an articulated handle (4) to face the switch (30) operationally and provided with a free end (40) able to lie next to the animal's tail so that when the animal lifts its tail prior to elimination, the switch (30) of the control transmitter (3) trips so that the motor (10) begins to turn and the faeces can be dragged by the turbine (9) through to the deposit (7).

5. The equine faeces collection system pursuant to claim 4 is **characterized by** having the support plate (5) endowed with an articulated appendix (50) to fit the support on the back of the animal.

6. The equine faeces collection system pursuant to claim 1 is **characterized by** having turbine blades (9) adapted to finely crush and break down the animal's faeces for their subsequent use as compost or biofuel.

7. The equine faeces collection system pursuant to at least one of the preceding claims is **characterized by** having the collection system capable of being connected to a carriage with an adjustable setting system (18).

8. The equine faeces collection system pursuant to claim 7 is **characterized by** having the motor (10) capable of being fed by the energy generated by movement of the carriage wheels.

## Patentansprüche

1. System zur Entsorgung von Pferdeexkrementen mindestens bestehend aus:
- Einem Behälter (7) zum Sammeln der Exkremente und
- Einer Auffangeinrichtung der Exkremente (2) im Wesentlichen in Form eines Schlauchrohrs mit einem Auslass (70) für die Exkremente, der mit dem Einlass des Sammelbehälter (7) verbunden ist und einem Einlass (13), der an den Analbereich des Tieres angepasst wird, so dass die Exkremente zum o.a. Sammelbehälter (7) geleitet werden können, in dem
die genannte Auffangeinrichtung (2) einen ersten Sammelbereich (8) hat, in dem sich der o.a. Auslass (70) befindet, der mit dem Einlass des Sammelbehälter (7) verbunden ist, und einen zweiten Sammelbereich (11), in dem der o.a. Einlass (13) an den ersten Sammelbereich (8) angekoppelt ist, um von der Ruhestellung in die Sammelstellung zu schalten, in der der Einlass (13) am Analbereich des Tieres anliegt; in dieser Sammelstellung befindet sich der Einlass (13) oberhalb des Auslasses (70), so dass die Exkremente durch Schwerkraft zum Sammelbehälter fallen können,
in dem im ersten Sammelbereich (8) eine durch einen Elektromotor (10) angetriebene Turbine (9) angeordnet ist, um die Exkremente zum Behälter (7) zu befördern.

2. Das Entsorgungssystem von Pferdeexkrementen gemäß Anspruch 1 kennzeichnet sich durch einen Elektromotor (10) mit eingebautem Empfänger (6) zur Fernbedienung des Motors.

3. Das Entsorgungssystem von Pferdeexkrementen gemäß Anspruch 1 und 2 kennzeichnet sich des Weiteren durch eine Antriebs- und Erfassungseinrichtung (1), über die der Elektromotor (10) eingeschaltet und der Moment erfasst wird, in dem das Tier den Schwanz hebt, um mit der Darmentleerung zu beginnen. Hierfür ist es entsprechend am Hinterteil des Tieres angebracht.

4. Das Entsorgungssystem von Pferdeexkrementen gemäß Anspruch 3 kennzeichnet sich durch eine Antriebs- und Erfassungseinrichtung (1), bestehend aus einer Auflageplatte (5), die am Hinterteil des Tieres anliegt und auf der ein Steuersender (3) mit Schalter (30) befestigt ist und ein Gelenkstil (4), um den Schalter (30) in Betriebsstellung zu schalten, ausgestattet mit einem freien Ende (40), das sich neben dem Schwanz des Tieres hält, so dass, sobald das Tier den Schwanz hebt, um mit der Darmentleerung zu beginnen, der Schalter (39) des Steuersenders (3) auslöst und der Elektromotor (10) anspringt, damit die Exkremente über die Turbine (9) zum Sammelbehälter (7) befördert werden können.

5. Das Entsorgungssystem von Pferdeexkrementen gemäß Anspruch 4 kennzeichnet sich durch eine Auflageplatte (5) mit einer beweglichen Halterung (50), um die Auflageplatte an den Hinterteil des Tieres anzupassen.

6. Das Entsorgungssystem von Pferdeexkrementen gemäß Anspruch 1 kennzeichnet sich durch Turbinenschaufeln (9), die die Pferdeexkremente für ihre weitere Verwendung als Kompost und Biotreibstoff fein zerkleinern.

7. Das Entsorgungssystem von Pferdeexkrementen gemäß mindestens einem obiger Ansprüche kennzeichnet sich dadurch, dass das Entsorgungssystem an einen Wagen mit einem einstellbaren Anschlusssystem (18) angeschlossen werden kann.

8. Das Entsorgungssystem von Pferdeexkrementen gemäß Anspruch 7 kennzeichnet sich durch einen Elektromotor (10), der durch die von den Radbewegungen des Wagens erzeugte Energie gespeist werden kann.

## Revendications

1. Un système de collecte de matières fécales équidés, comprenant au moins les éléments suivants:
- Un réservoir (7) pour la collecte de matière fécale, et
- Un dispositif de collecte de matières fécales (2) essentiellement sous la forme d'un tube, avec une sortie pour les matières fécales (70) unie à l'entrée du réservoir de collecte (7) et un orifice d'entrée (13) pour s'adapter à la région anale de l'animal, de sorte que les excréments puissent être conduits jusqu'au réservoir susmentionné (7), ainsi
ce dispositif de collecte (2) a une première zone de collecte (8) dans laquelle se trouve l'orifice d'entrée (70) et qui est unie à l'entrée du réservoir de collecte (7), et une deuxième zone de collecte (11) dans laquelle est situé l'orifice d'entrée (13), caractérisé parce que la deuxième zone de collecte (11) est couplée à la première zone (8) pour passer de la position de repos à la position de collecte, dans laquelle l'orifice d'entrée (13) est en face de la région anale de l'animal ; dans cette position de collecte, l'orifice d'entrée (13) est situé plus haut que l'orifice de sortie (70), de sorte que les matières fécales peuvent tomber par gravité dans le réservoir.
Ainsi, la première zone de collecte (8) comprend à l'intérieur de celui-ci une turbine (9) entraînée par un moteur électrique (10) pour transporter les matières fécales jusqu'au réservoir (7).

2. Le système de collecte des matières fécales équinées selon la revendication 1, a un moteur électrique (10), y compris un récepteur (6) pour le faire fonctionner par télécommande.

3. Le système de collecte des matières fécales équinées selon les revendications 1 et 2 ont, en plus, un dispositif d'actionnement et de détection (1) pour déplacer le moteur électrique (10) et détecter quand l'animal monte la queue et l'élimination des matières fécales commence, ce système est relié fonctionnellement à la partie arrière de l'animal.

4. Le système de collecte des matières fécales équinées selon la reventication 3 est **caractérisé par** un dispositif d'entraînement et de détection (1) formé par une plaque de support (5) qui prend appui sur la partie arrière de l'animal et qui est fixé à un émetteur de commande (3) avec un interrupteur d'actionnement (30) et un manche articulé (4) pour activer fonctionnellement l'interrupteur (30), pourvu d'une extrémité libre (40) capable de rester à côté de la queue de l'animal, de sorte que quand l'animal lève la queue avant de commencer l'élimination de la matière fécale, l'interrupteur (30) du transmetteur de commande (3) est activé, de sorte que le moteur (10) commande commencera à tourner et les matières fécales peuvent être entrainées par la turbine (9) jusqu'au réservoir (7).

5. Le système de collecte des matières fécales équinées selon la revendication 4 est **caractérisé par** une plaque support (5) pourvu d'un supplément articulé (50) afin d'adapter le support à la partie arrière de l'animal.

6. Le système de collecte des matières fécales équinées selon la revendication 1 est **caractérisé par** des pales de la turbine (9) adaptées pour écraser et briser en petits morceaux, les excréments de l'animal pour une utilisation ultérieure comme engrais ou biocarburant.

7. Le système de collecte des matières fécales équinées selon, au moins une des revendications précédentes, est **caractérisé par** un système de collecte capable d'être connecté à une voiture à cheval avec un système de maintien réglable (18).

8. Le système de collecte des matières fécales équinées selon la revendication 7 est **caractérisé par** un moteur (10) apte pour être actionné par l'énergie produite par le mouvement des roues de la voiture à cheval.
